# EUROPEAN PATENT SPECIFICATION

(11) **EP 2 631 986 B1**
(45) Date of publication and mention of the grant of the patent: **02.11.2016**
(21) Application number: 12198153.4
(22) Date of filing: 19.12.2012
(51) Int. Cl.: H01M 2/10, H01M 10/615, H01M 10/6556, H01M 10/6567, H01M 10/625, H01M 10/647

(54) **Battery module**
Batteriemodul
Module de batterie

(30) Priority: 24.02.2012 US 201261603159 P; 12.09.2012 US 201213612693
(43) Date of publication of application: 28.08.2013
(73) Proprietor: Samsung SDI Co., Ltd., Yongin-si, Gyeonggi-do (KR); ROBERT BOSCH GMBH, 70442 Stuttgart (DE)
(72) Inventor: Cha, In-Hwan, Yongin-si, Gyeonggi-do (KR)
(74) Representative: Gulde & Partner

(56) References cited:
- DE-A1-102008 059 961
- DE-A1-102009 058 880
- US-A1- 2011 104 545

## Description

### FIELD OF THE INVENTION

An aspect of the present invention relates to a battery module, and more particularly, to a battery module capable of improving insulation performance between battery cells.

### DESCRIPTION OF THE RELATED ART

In general, battery cells are used as energy sources for mobile devices, electric vehicles, hybrid electric vehicles, and the like. The battery cells are used by variously changing their shapes depending on the kind of external device having the battery cells applied thereto.

A large-capacity battery module is configured by electrically connecting a plurality of battery cells to one another so as to increase power and capacity when long-time and high-power driving is necessary for an electric vehicle or hybrid electric vehicle having high power consumption. The battery module can increase its output voltage or current according to the number of battery cells built therein.

The power and capacity of the battery module is considerably influenced by a temperature at which the battery module is used. DE 10 2008 059 961 A1 therefore discloses a battery with a cooling plate. US 2011/0104545 A1 discloses a battery with a temperature control unit. That is, the power of the battery module used in a low-temperature area is lower than that of the battery module used in a normal-temperature area. Therefore, when the battery module is intended to be used in a low-temperature area, the battery module is designed in consideration of not only cooling but also heating.

### SUMMARY

Embodiments provide a battery module capable of easily discharging, to an outside thereof, condensate water produced on a surface of a heat exchange member contacting the battery module when the battery module is heated.

According to an aspect of the present invention, there is provided a battery module including: a plurality of battery cells stacked along a first direction, and a heat exchange member provided at and being in heat exchange contact with the bottom surfaces of the plurality of battery cells. The heat exchange member comprises at least one groove formed in its surface facing the plurality of battery cells. The at least one groove is configured to guide a condensation fluid away from the battery cells. A bottom surface of the groove is downwardly inclined along its length, and/or the depth of the groove is increasing along its length. The at least one groove preferably extends along a second direction different than the first direction, preferably perpendicular to the first direction, and may be formed overlapping with a boundary between two battery cells.

The at least one groove may on the other hand be formed parallel to the first direction of the battery cells.

The at least one groove preferably extends in the surface facing the plurality of battery cells from one side surface of the heat exchange member to the opposing side surface of the heat exchange member.

The depth of the groove is preferably continuously increasing along its length, even more preferably linearly increasing.

The heat exchange member preferably has a plate-like shape.

The largest height or depth of the groove ranges from 30% to 60% of the height of the heat exchange member.

The slope of the bottom surface of the at least one groove ranges from 30-60% of the height of the heat exchange member divided by the length of the at least one groove.

The at least one groove is formed between and overlapping with two adjacent battery cells.

A groove may be formed between each pair of battery cells, or every second pair of battery cells.

The at least one groove may extend along the entire width of a battery cell, preferably along the entire width of the heat exchange member.

The heat exchange member may comprise an inlet and an outlet for a heat exchange medium, the inlet and outlet being connected by a flow path inside the heat exchange member. The inlet may be provided on one surface of the heat exchange member and the outlet may be provided on its opposite side. The depth of the groove increasing from the side of the heat exchange member where the inlet is formed to the side where the outlet is formed.

The groove may not be formed on the side of the heat exchange member having the inlet.

The heat exchange medium comprises ethylene glycol and/or propylene glycol.

According to the present invention, the battery module can easily discharge, to an outside thereof, condensate water produced on a surface of a heat exchange member contacting the battery module when the battery module is heated, so that the insulation performance between battery cells can be maintained by preventing a short circuit between the battery cells.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a perspective view of battery module according to a first embodiment of the present invention.
FIG. 2A is a perspective view of a heat exchange member according to the first embodiment of the present invention. Fig. 2B shows an alternative form of the heat exchange member of the first embodiment of the invention.
FIG. 3A is a side view of the battery module viewed from one side of FIG. 1.
FIG. 3B is a side view of the battery module viewed from the other side of FIG. 1.
Fig. 3C is a side view of the battery module having a heat exchange member as shown in Fig. 2B.
FIG. 4 is a sectional view taken along line A-A' of FIG. 1.
FIG. 5 is a perspective view of battery module according to a second embodiment of the present invention.

### DETAILED DESCRIPTION

In the following detailed description, only certain exemplary embodiments of the present invention have been shown and described, simply by way of illustration. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements. In the drawings, the thickness or size of layers are exaggerated for clarity and not necessarily drawn to scale.

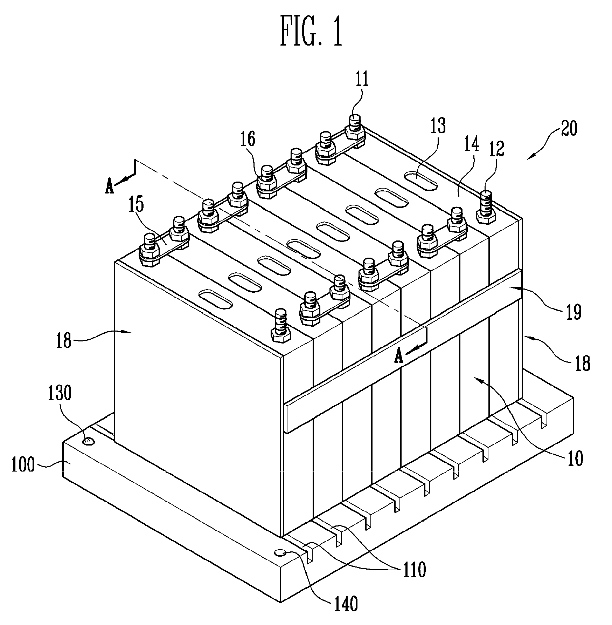

FIG. 1 is a perspective view of battery module according to a first embodiment of the present invention.

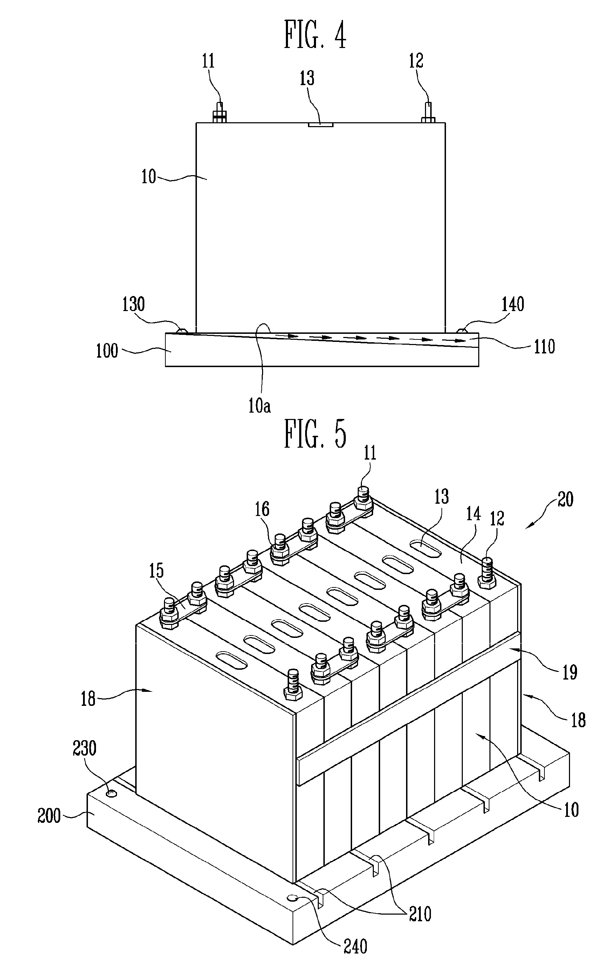

Referring to FIG. 1, the battery module 20 according to this embodiment includes a plurality of battery cells 10 electrically connected to one another, and a heat exchange member 100 provided at bottom surfaces of the battery cells 10. At least one groove 110 is formed on the surface of the heat exchange member 100 contacting the bottom surfaces 10a (See FIG. 4) of the plurality of battery cells 10. The groove 110 formed in the heat exchange member 100 is formed to be downwardly inclined from one side to the other side between the battery cells 10.

Here, the bottom surface of the battery cell 10 is provided opposite to a cap plate 14 provided with terminal parts 11 and 12 of the battery cell 10. The heat-exchange member 100 may be provided to support the bottom surfaces of the battery cells 10.

An inlet 130 through which a head exchange medium is flowed in the heat exchange member 100 is provided at one side of the heat exchange member 100, and an outlet 140 through which the heat exchange medium is discharged from the heat exchange member 100 is provided at the other side of the heat exchange member 100.

Although not shown in this figure, a flow path which the heat exchange medium can move along is formed in the inside of the heat exchange member 100. The heat exchange medium may include, as a refrigerant, at least one of ethylene glycol and propylene glycol.

When the battery cell 10 is intended to be cooled down, the heat exchange medium colder than the battery cell 10 is necessarily supplied to the heat exchange member 100 contacting the battery cell 10. When the battery cell 10 is intended to be heated, the heat exchange medium hotter than the battery cell 10 is necessarily supplied to the heat exchange member 100. In this case, the temperature of the battery cell is increased due to the hot heat exchange medium. However, when the battery cell 10 is heated, the temperature of the battery cell 10 is lower than that of the heat exchange medium, and hence condensate water is produced on the surface of the heat exchange member 100 contacting the battery cell 10. The condensate water produced as described above degrades the insulating performance between the battery cells 10, and a short circuit between the battery cells 10 may occur.

The grooves 110 are formed between the battery cells 10, respectively, so that the condensate water produced on the surface of the heat exchange member 100 can be easily discharged from the heat exchange member 100. Throughout the embodiments of the present invention, if not stated otherwise, the battery cells 10 are stacked along a first direction and the grooves 110 extend along a second direction, different from the first direction. More preferably, the second direction is perpendicular to the first direction. Even more preferably, the grooves 110 are formed such that they overlap, preferably fully overlap, with the boundary between two adjacent battery cells 10. In this way, one groove is used for two battery cells 10 and the condensate formed between two battery cells 10, e. g. due to temperature differences during use, can be collected and guided away from the battery cells 10 and the battery module 20.

Hereinafter, the battery module 20 will be briefly described.

The battery module 20 according to this embodiment has a configuration in which the plurality of battery cells 10 are arranged in one direction, and each of the battery cells 10 has the cap plate 14 provided with the terminal parts 11 and 12 formed on the top surface thereof. Each of the battery cells 10 has the bottom surface 10a (See FIG. 4) provided opposite to the cap plate 14, and the heat exchange member 100 may be provided to support to the bottom surfaces of the battery cells 10.

The battery cell 10 may include a battery case having one opened surface, and an electrode assembly and an electrolyte, accommodated in the battery case. The electrode assembly and the electrolyte generate energy by an electrochemical reaction therebetween, and the battery case is sealed by the cap plate 14. The cap plate 14 may be provided with the terminal parts 11 and 12 and a vent part 13. The terminal parts 11 and 12 may be positive and negative electrode terminals 11 and 12 having different polarities from each other. The vent part 13 is a safety means of the battery cell 10 and acts as a path through which gas generated in the inside of the battery cell 10 is exhausted to the outside of the battery cell 10. The positive and negative electrodes terminals 11 and 12 of neighboring battery cells 10 may be electrically connected to each other through a bus-bar 15, and the bus-bar 15 may be fixed to the positive and negative electrode terminals 11 and 12 using a member such as a nut 16.

The plurality of battery cells 10 are aligned in one direction. In this case, one or more plates 18 and 19 may be used in order to fix the alignment state of the battery cells 10.

The plates 18 and 19 may include a pair of end plates 18 facing wide surfaces of the battery cells, and a pair of side plates 19 connected to the end plates 18 so as to be adjacent to side surfaces of the battery cells 10. The plates 18 and 19 are used to fix the plurality of battery cells 10, and may be variously modified according to a design of the battery module 20.

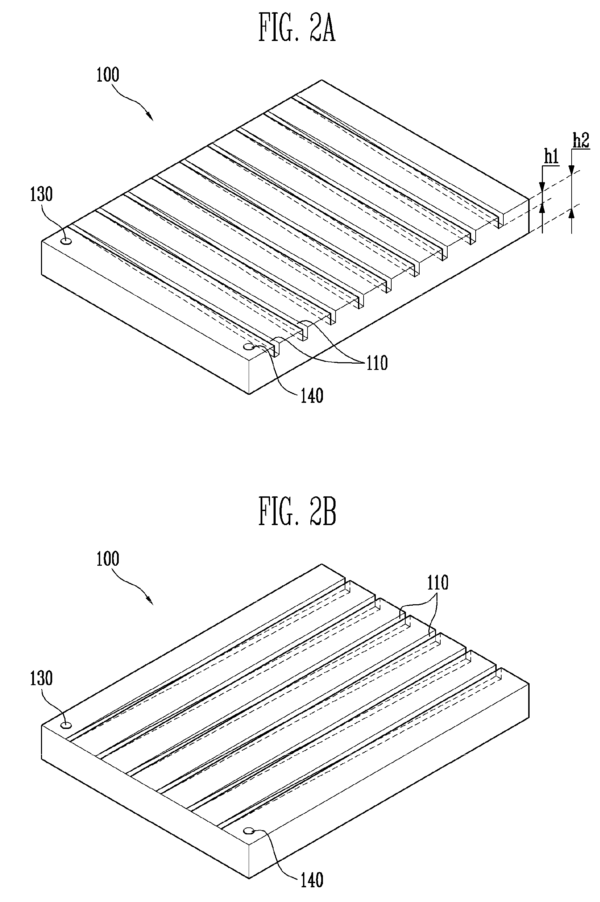

FIG. 2 is a perspective view of the heat exchange member according to the first embodiment of the present invention.

Referring to FIG. 2, the heat exchange member 100 according to this embodiment is provided to support the bottom surfaces of the battery cells 10 (See FIG. 1), and may be formed in the shape of a plate having a predetermined thickness. The heat exchange member 100 is generally used to control heat generated from the battery cells 10. Although not shown in this figure, a flow path along which a heat exchange medium is flowed in the heat exchange member 100 is necessarily provided in the heat exchange member 100 so that the heat exchange member 100 can perform a heat exchange with the battery module 20 (See FIG. 1), i.e., the battery cells 10.

When the temperature of the heat exchange medium is high, condensate water is produced on the surface of the heat exchange member 100. In this case, at least one groove 110 is formed so that the condensate water is discharged to the outside of the heat exchange member 100 therethrough. The bottoms of the grooves 110 are formed to be downwardly inclined or declining from one side to the other side between the battery cells 10. In this case, the grooves 110 are formed between the battery cells 10, respectively. That is, e. g. nine grooves 110 may be formed in the surface of the heat exchange member 100 of the battery module 20 having eight battery cells 10.

The inlet 130 through which a head exchange medium is flowed in the heat exchange member 100 is provided at one side of the heat exchange member 100, and the outlet 140 through which the heat exchange medium is discharged from the heat exchange member 100 is provided at the other side of the heat exchange member 100. The groove 110 is downwardly inclined from the side of the inlet 130 to the side of the outlet 140. In other words, the groove 110 is deeper on one side end compared to its opposing side end.

The inclination height h1 of the groove 110 at the side of the outlet 140 may be formed to be 30 to 60% of the height h2 of the heat exchange member 100. In other words, preferably the bottom of the groove 110 declines linearly and the slope of the declination is 30 to 60% of the height h2 of the heat exchange member 100 divided by the length of the groove 110, here the width of the heat exchange member 100. When the inclination height h1 of the groove 110 at the side of the outlet 140 is formed to be less than 30% of the height h2 of the heat exchange member 100, a sufficiently inclined surface is not formed, and therefore, it is difficult that the condensate water produced on the surface of the heat exchange member 100 is discharged. When the inclination height h1 of the groove 110 at the side of the outlet 140 is formed to exceed 60% of the height h2 of the heat exchange member 100, the heat exchange member 100 does not secure a sufficient space in which the flow path along which the heat exchange medium is flowed in the heat exchange member 100 is to be formed in the heat exchange member 100. Thus, the inclination height h1 of the groove 110 at the side of the outlet 140 is preferably formed to be 30 to 60% of the height h2 of the heat exchange member 100.

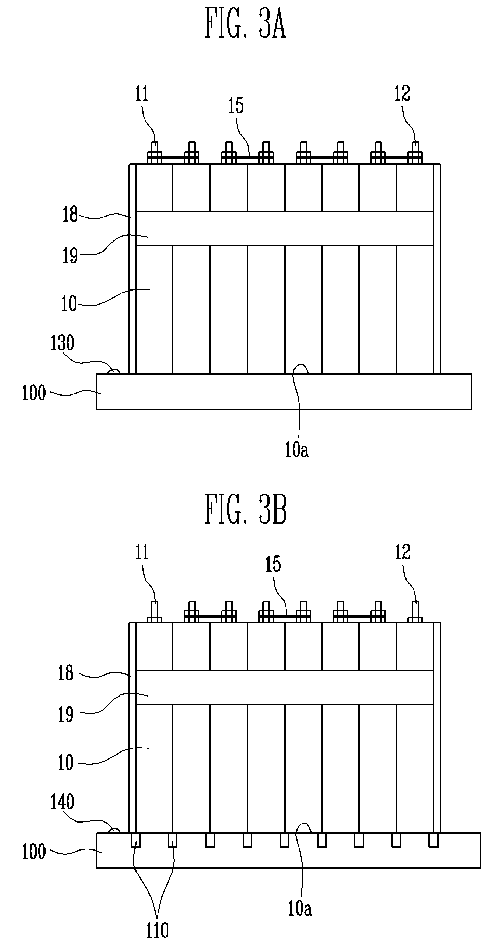

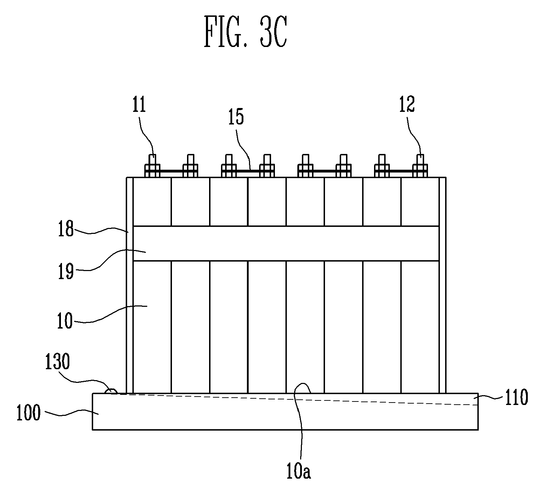

FIG. 3A is a side view of the battery module viewed from one side of FIG. 1. FIG. 3B is a side view of the battery module viewed from the other side of FIG. 1.

Referring to FIGS. 3A and 3B, the grooves 110 formed in the surface of the heat exchange member 100 contacting the bottom surfaces 10a (See FIG. 4) of the battery cells 10 are not viewed from the side of the battery cell 10, at which the inlet 130 is formed (FIG. 3a). However, the grooves 110 having a predetermined depth are viewed from the side of the battery cell 10, at which the outlet 140 is formed (FIG. 3b).

Yet, it is pointed out that a certain depth of the grooves 110 may also be present on the side of the battery cell 10 at which the inlet 130 is formed, as long as a slope of the bottom surface of the grooves 110 is present and preferably the slope is within the range of 30-60% of the height of the heat exchange member h2 divided by the length of the groove 110.

The grooves 110 are formed to be downwardly inclined with an increasing depth from one side to the other side between the battery cells 10, and the condensate water produced on the surface of the heat exchange member 100 can be discharged through the grooves 110. The inclined surface of the groove 110 is formed to be downwardly inclined from the side of the inlet 130 to the side of the outlet 140. The end of the groove 110 may be connected to a rim for guiding the condensate away from the battery module 20, e. g. to a reservoir (not shown). Accordingly, the battery module 20 can have a structure in which the condensate water produced on the surface of the heat exchange member 100 is discharged to the outside of the heat exchange member 100 through the outlet 140.

In this case, the grooves 110 are formed between the respective battery cells 10, so that the condensate water produced on the surface of the heat exchange member 100 contacting the bottom surfaces 10a of the battery cells 10 can be more easily discharged to the outside of the heat exchange member 100.

FIG. 4 is a sectional view taken along line A-A' of FIG. 1.

Referring to FIG. 4, the grooves 110 are formed to be downwardly inclined with an increasing depth from one side to the other side between the battery cells 10, so that the condensate water can be discharged to the outside of the heat exchange member 100 through the grooves 110. Here, the inlet 130 is formed at one end between the battery cells 10 and the outlet 140 is formed at the other end between the battery cells 10. Accordingly, the condensate water produced on the surface of the heat exchange member 100 can be easily discharged to the side of the outlet 140.

In this case, the inclination height of the groove 110 may be formed to be 30 to 60% of the height of the heat exchange member 100. In other words, the slope of the declination is 30 to 60% of the height h2 of the heat exchange member 100 divided by the length of the groove 110, here the width of the heat exchange member 100. When the inclination height of the groove 110 at the side of the outlet 140 is formed to be less than 30% of the height of the heat exchange member 100, a sufficiently inclined surface is not formed, and therefore, it is difficult that the condensate water produced on the surface of the heat exchange member 100 is discharged. When the inclination height of the groove 110 at the side of the outlet 140 is formed to exceed 60% of the height of the heat exchange member 100, the heat exchange member 100 does not secure a sufficient space in which the flow path along which the heat exchange medium is flowed in the heat exchange member 100 is to be formed in the heat exchange member 100. Thus, the inclination height h1 of the groove 110 at the side of the outlet 140 is preferably formed to be 30 to 60% of the height h2 of the heat exchange member 100.

FIG. 5 is a perspective view of battery module according to a second embodiment of the present invention.

Referring to FIG. 5, the battery module 20 according to this embodiment includes a plurality of battery cells 10 electrically connected to one another, and a heat exchange member 200 provided at bottom surfaces of the battery cells 10. At least one groove 210 is formed on the surface of the heat exchange member 100 contacting the bottom surfaces 10a (See FIG. 4) of the plurality of battery cells 10.

The grooves 210 are formed to be downwardly inclined from one side to the other side between the battery cells 10, so that the condensate water produced on the surface of the heat exchange member 200 can be easily discharged to the outside of the heat exchange member 200 through the grooves 210. The grooves 210 may be formed between every predetermined number of the battery cells 10, respectively. In this embodiment, the grooves 210 are formed between every two of the battery cells 10, respectively.

In this case, condensate water produced on the surface of the heat exchange member 200 contacting the bottom surfaces of the battery cells 10 between which the groove 210 is not formed may be discharged through the groove 210 formed between adjacent battery cells 10.

An inlet 230 through which a head exchange medium is flowed in the heat exchange member 200 is provided at one side of the heat exchange member 200, and an outlet 240 through which the heat exchange medium is discharged from the heat exchange member 200 is provided at the other side of the heat exchange member 200. In this case, an end of the groove 210 may be connected to the outlet 240. Accordingly, the condensate water can be discharged through the outlet 240.

In the following, a battery module according to a third embodiment of the present invention is discussed. The only difference with respect to the other embodiments is the direction of extension of the grooves. In the present embodiment, the grooves are formed to extend substantially parallel to the stacking direction of battery cells.

In the embodiments of the present invention, it has been described that the grooves are formed between the battery cells or between every two of the battery cells, respectively. However, the shape and number of the grooves is not limited to the embodiments of the present invention, and one groove may be formed for each module.

## Claims

1. A battery module (20) comprising:
a plurality of battery cells (10) stacked along a first direction,
a heat exchange member (100) provided at and being in heat exchange contact with the bottom surfaces of the plurality of battery cells (10),
wherein
the heat exchange member (100) comprises at least one groove (110) formed in its surface facing the plurality of battery cells (10), wherein said groove is configured to guide a condensation fluid away from the battery cells (10),
**characterized in that** the depth of the groove (110) is increasing along its length, and/or
a bottom surface of the groove (110) is downwardly inclined along its length.

2. The battery module (20) of claim 1, wherein the at least one groove (110) comprises at least one of the following features:
extends along a second direction different than the first direction, preferably perpendicular to the first direction, and
is formed overlapping with a boundary between two battery cells (10).

3. The battery module (20) of claim 1, wherein the at least one groove (110) is formed parallel to the first direction of the battery cells (10).

4. The battery module (20) of any of the previous claims, wherein the at least one groove (110) extends in the surface facing the plurality of battery cells (10) from one side surface of the heat exchange member (100) to the opposing side surface of the heat exchange member (100).

5. The battery module (20) of one of the previous claims, wherein a depth of the groove (110) is continuously increasing along its length.

6. The battery module (20) of one of the previous claims, wherein the heat exchange member (100) has a plate-like shape.

7. The battery module (20) of one of the previous claims, wherein the largest height (h1) of the groove (110) ranges from 30% to 60% of the height (h2) of the heat exchange member (100).

8. The battery module (20) of one of the previous claims, wherein slope of the bottom surface of the at least one groove (110) ranges from 30-60% of the height of the heat exchange member (100) divided by the length of the at least one groove (110).

9. The battery module (20) of one of the previous claims, wherein the at least one groove (110) is formed between and overlapping with two adjacent battery cells (10).

10. The battery module (20) of one of the previous claims, wherein a groove (110) is formed between:
each pair of battery cells (10), or
every second pair of battery cells (10).

11. The battery module (20) of one of the previous claims, wherein the at least one groove extends along the entire width of a battery cell (10), preferably along the entire width of the heat exchange member (100).

12. The battery module (20) of one of the previous claims, wherein the heat exchange member (100) comprises an inlet (130) and an outlet (140) for a heat exchange medium, the inlet (130) and outlet (140) being connected by a flow path inside the heat exchange member (100).

13. The battery module (20) of claim 12, wherein the inlet (130) is provided on one surface of the heat exchange member (100) and the outlet (140) is provided on its opposite side, the depth of the groove (110) increasing from the side of the heat exchange member (100) where the inlet (130) is formed to the side where the outlet (140) is formed.

14. The battery module (20) of one of claims 12 or 13, wherein the groove (110) is not formed on the side of the heat exchange member (100) having the inlet (10).

15. The battery module (20) of one of claims 12 to 14, wherein the heat exchange medium comprises ethylene glycol and/or propylene glycol.

## Patentansprüche

1. Batteriemodul (20), umfassend:
eine Mehrzahl von Batteriezellen (10), die entlang einer ersten Richtung gestapelt sind,
ein Wärmeaustauschelement (100), das an den Unterseiten der Mehrzahl von Batteriezellen (10) und in Wärmeaustauschkontakt mit diesen stehend vorgesehen ist,
wobei
das Wärmeaustauschelement (100) mindestens eine Rille (110) umfasst, die in seiner der Mehrzahl von Batteriezellen (10) zugewandten Oberfläche ausgebildet ist, wobei die Rille so ausgestaltet ist, dass sie ein Kondensationsfluid von den Batteriezellen (10) wegleitet,
**dadurch gekennzeichnet, dass** die Tiefe der Rille (110) entlang ihrer Länge zunimmt und/oder
eine Unterseite der Rille (110) entlang ihrer Länge nach unten geneigt ist.

2. Batteriemodul (20) nach Anspruch 1, wobei die mindestens eine Rille (110) mindestens eines der folgenden Merkmale umfasst:
sie erstreckt sich entlang einer zweiten Richtung, die sich von der ersten Richtung unterscheidet, vorzugsweise senkrecht zu der ersten Richtung, und
ist überlappend mit einer Grenze zwischen zwei Batteriezellen (10) ausgebildet.

3. Batteriemodul (20) nach Anspruch 1, wobei die mindestens eine Rille (110) parallel zu der ersten Richtung der Batteriezellen (10) ausgebildet ist.

4. Batteriemodul (20) nach einem der vorangehenden Ansprüche, wobei die mindestens eine Rille (110) sich in der der Mehrzahl von Batteriezellen (10) zugewandten Oberfläche von einer Seitenfläche des Wärmeaustauschelements (100) zur gegenüberliegenden Seitenfläche des Wärmeaustauschelements (100) erstreckt.

5. Batteriemodul (20) nach einem der vorangehenden Ansprüche, wobei eine Tiefe der Rille (110) entlang ihrer Länge kontinuierlich zunimmt.

6. Batteriemodul (20) nach einem der vorangehenden Ansprüche, wobei das Wärmeaustauschelement (100) eine plattenartige Form aufweist.

7. Batteriemodul (20) nach einem der vorangehenden Ansprüche, wobei die größte Höhe (h1) der Rille (110) 30 % bis 60 % der Höhe (h2) des Wärmeaustauschelements (100) beträgt.

8. Batteriemodul (20) nach einem der vorangehenden Ansprüche, wobei das Gefälle der Unterseite der mindestens einen Rille (110) 30-60 % der Höhe des Wärmeaustauschelements (100), dividiert durch die Länge der mindestens einen Rille (110), beträgt.

9. Batteriemodul (20) nach einem der vorangehenden Ansprüche, wobei die mindestens eine Rille (110) zwischen zwei benachbarten Batteriezellen (10) und überlappend mit diesen ausgebildet ist.

10. Batteriemodul (20) nach einem der vorangehenden Ansprüche, wobei eine Rille (110) ausgebildet ist zwischen:
jedem Paar Batteriezellen (10) oder
jedem zweiten Paar Batteriezellen (10).

11. Batteriemodul (20) nach einem der vorangehenden Ansprüche, wobei die mindestens eine Rille sich entlang der gesamten Breite einer Batteriezelle (10), vorzugsweise entlang der gesamten Breite des Wärmeaustauschelements (100) erstreckt.

12. Batteriemodul (20) nach einem der vorangehenden Ansprüche, wobei das Wärmeaustauschelement (100) einen Einlass (130) und einen Auslass (140) für ein Wärmeaustauschmedium umfasst, wobei der Einlass (130) und der Auslass (140) durch einen Strömungsweg im Inneren des Wärmeaustauschelements (100) verbunden sind.

13. Batteriemodul (20) nach Anspruch 12, wobei der Einlass (130) auf einer Oberfläche des Wärmeaustauschelements (100) vorgesehen ist und der Auslass (140) auf seiner gegenüberliegenden Seite vorgesehen ist, wobei die Tiefe der Rille (110) von der Seite des Wärmeaustauschelements (100), wo der Einlass (130) ausgebildet ist, zu der Seite, wo der Auslass (140) ausgebildet ist, zunimmt.

14. Batteriemodul (20) nach einem der Ansprüche 12 oder 13, wobei die Rille (110) nicht auf der den Einlass (10) aufweisenden Seite des Wärmeaustauschelements (100) ausgebildet ist.

15. Batteriemodul (20) nach einem der Ansprüche 12 bis 14, wobei das Wärmeaustauschmedium Ethylenglykol und/oder Propylenglykol umfasst.

## Revendications

1. Module de batterie (20) comprenant :
une pluralité d'éléments de batterie (10) empilés le long d'une première direction,
un organe d'échange de chaleur (100) prévu au niveau des surfaces inférieures de la pluralité d'éléments de batterie (10) et étant en contact d'échange de chaleur avec celles-ci,
dans lequel
l'organe d'échange de chaleur (100) comprend au moins une rainure (110) formée dans sa surface faisant face à la pluralité d'éléments de batterie (10), où ladite rainure est configurée pour guider un fluide de condensation loin des éléments de batterie (10),
**caractérisé en ce que** la profondeur de la rainure (110) augmente le long de sa longueur, et/ou
une surface inférieure de la rainure (110) est inclinée vers le bas le long de sa longueur.

2. Module de batterie (20) de la revendication 1, dans lequel l'au moins une rainure (110) comprend au moins l'une des caractéristiques suivantes :
elle s'étend le long d'une deuxième direction différente de la première direction, de préférence perpendiculaire à la première direction, et
elle est formée de manière à chevaucher une limite entre deux éléments de batterie (10).

3. Module de batterie (20) de la revendication 1, dans lequel l'au moins une rainure (110) est formée parallèlement à la première direction des éléments de batterie (10).

4. Module de batterie (20) de l'une des revendications précédentes, dans lequel l'au moins une rainure (110) s'étend dans la surface faisant face à la pluralité d'éléments de batterie (10) à partir d'une surface latérale à l'organe d'échange de chaleur (100) vers la surface latérale opposée de l'organe d'échange de chaleur (100).

5. Module de batterie (20) de l'une des revendications précédentes, dans lequel la profondeur de la rainure (110) augmente continuellement le long de sa longueur.

6. Module de batterie (20) de l'une des revendications précédentes, dans lequel l'organe d'échange de chaleur (100) a une forme de plaque.

7. Module de batterie (20) de l'une des revendications précédentes, dans lequel la plus grande hauteur (h1) de la rainure (110) est comprise entre 30 % et 60 % de la hauteur (h2) de l'organe d'échange de chaleur (100).

8. Module de batterie (20) de l'une des revendications précédentes, dans lequel la pente de la surface inférieure de l'au moins une rainure (110) varie de 30 à 60 % de la hauteur de l'organe d'échange de chaleur (100) divisé par la longueur de l'au moins une rainure (110).

9. Module de batterie (20) de l'une des revendications précédentes, dans lequel l'au moins une rainure (110) est formée entre deux éléments de batterie (10) adjacents et chevauche ceux-ci.

10. Module de batterie (20) de l'une des revendications précédentes, dans lequel une rainure (110) est formée entre :
chaque paire d'éléments de batterie (10), ou
chaque deuxième paire d'éléments de batterie (10).

11. Module de batterie (20) de l'une des revendications précédentes, dans lequel l'au moins une rainure s'étend le long de toute la largeur d'un élément de batterie (10), de préférence le long de toute la largeur de l'organe d'échange de chaleur (100).

12. Module de batterie (20) de l'une des revendications précédentes, dans lequel l'organe d'échange de chaleur (100) comprend une entrée (130) et une sortie (140) pour un agent d'échange de chaleur, l'entrée (130) et la sortie (140) étant reliées par un trajet d'écoulement à l'intérieur de l'organe d'échange de chaleur (100).

13. Module de batterie (20) de la revendication 12, dans lequel l'entrée (130) est prévue sur une surface de l'organe d'échange de chaleur (100) et la sortie (140) est pourvue sur son côté opposé, la profondeur de la rainure (110) augmentant à partir du côté de l'organe d'échange de chaleur (100) où l'entrée (130) est formée vers le côté où la sortie (140) est formée.

14. Module de batterie (20) de l'une des revendications 12 ou 13, dans lequel la rainure (110) n'est pas formée sur le côté de l'organe d'échange de chaleur (100) ayant l'entrée (10).

15. Module de batterie (20) de l'une des revendications 12 à 14, dans lequel l'agent d'échange de chaleur comprend de l'éthylèneglycol et/ou du propylèneglycol.
